(19) Europäisches Patentamt / European Patent Office / Office européen des brevets

(11) **EP 1 639 860 B1**

(12) **FASCICULE DE BREVET EUROPEEN**

(45) Date de publication et mention
de la délivrance du brevet:
**14.11.2007 Bulletin 2007/46**

(21) Numéro de dépôt: **04767440.3**

(22) Date de dépôt: **24.06.2004**

(51) Int Cl.:
***H05B 3/48*** *(2006.01)*     ***G01K 7/16*** *(2006.01)*

(86) Numéro de dépôt international:
**PCT/FR2004/001584**

(87) Numéro de publication internationale:
**WO 2005/002281 (06.01.2005 Gazette 2005/01)**

(54) **RESISTANCE CHAUFFANTE NOTAMMENT POUR LA CHAUFFEE D'UNE PIECE MASSIVE TELLE QU'UNE SONDE DE TEMPERATURE ET/OU DE PRISE DE PRESSION**

HEIZWIDERSTAND, INSBESONDERE FÜR DIE ERHITZUNG EINES MASSIVEN WERKSTÜCKS WIE EINE TEMPERATUR- UND/ODER DRUCKMESSSONDE

HEATED RESISTANCE ESPECIALLY FOR HEATING A SOLID PART SUCH AS A TEMPERATURE PROBE AND/OR A PRESSURE PROBE

(84) Etats contractants désignés:
**AT BE BG CH CY CZ DE DK EE ES FI FR GB GR HU IE IT LI LU MC NL PL PT RO SE SI SK TR**

(30) Priorité: **27.06.2003 FR 0307792**

(43) Date de publication de la demande:
**29.03.2006 Bulletin 2006/13**

(73) Titulaire: **Auxitrol SA**
**18000 Bourges (FR)**

(72) Inventeur: **LHUILLIER, Bruno**
**F-36100 Les Bordes (FR)**

(74) Mandataire: **Callon de Lamarck, Jean-Robert**
**Cabinet Régimbeau**
**20, rue de Chazelles**
**75847 Paris cedex 17 (FR)**

(56) Documents cités:
**EP-A- 1 243 904       US-A- 4 934 831**
**US-A- 5 161 894       US-A- 5 804 791**

• **PATENT ABSTRACTS OF JAPAN vol. 2000, no. 26, 1 juillet 2002 (2002-07-01) -& JP 2001 267046 A (IBIDEN CO LTD), 28 septembre 2001 (2001-09-28)**

EP 1 639 860 B1

## Description

L'invention concerne les résistances chauffantes, en particulier pour la chauffe et la mise à température d'une pièce massive. Elle concerne notamment la mise à température d'un organe tel qu'une sonde de mesure d'un paramètre d'un flux d'air, cet organe étant monté à bord d'un véhicule. Il s'agit par exemple d'une sonde de température montée à bord d'un avion.

Un tel organe est par exemple connu du document FR-2 808 874 au nom de la demanderesse. Cet organe vise à mesurer la température du flux d'air entrant dans le réacteur d'un avion. Compte tenu de la température très basse de ce flux d'air, pour éviter la formation de givre sur la sonde de mesure, on prévoit une résistance chauffante qui la maintient à une température adaptée.

Le document JP-A-2001-267046 décrit une résistance chauffante comprenant un fil électrique et une gaine en céramique entourant le fil.

Il est fréquent qu'une telle résistance subisse diverses déformations en vue de son intégration à l'organe ou lors de cette intégration. Par ailleurs, une telle résistance peut comprendre une gaine en céramique pour l'isolation électrique. Or, un tel agencement de la résistance entraîne qu'elle ne tolère que de faibles déformations sans quoi elle se rompt et s'effrite. Or la décohésion de l'isolateur conduit à une perte de l'isolement électrique et donc à une dégradation des propriétés chauffantes de la résistance, entraînant elle-même un mauvais fonctionnement de la sonde de température.

Un but de l'invention est donc de fournir une résistance chauffante supportant des déformations importantes en vue de son intégration sur l'organe à chauffer sans détérioration des propriétés chauffantes de la résistance.

A cet effet, on prévoit une résistance chauffante, notamment pour la chauffe d'une pièce massive, comprenant :

- un fil électrique ; et
- une gaine en céramique entourant le fil,

la gaine comprenant une couche tissée.

Ainsi, la couche tissée de la gaine en céramique en maintient la cohésion au cours des différentes opérations de mise en forme et d'assemblage. Elle assure la cohésion de l'isolant en cours du procédé de fabrication et cela même si la résistance subit des déformations et des mises en forme sévères. La résistance selon l'invention garantit ainsi la continuité de l'isolement électrique et par conséquent les propriétés thermiques optimales de la résistance.

La résistance selon l'invention pourra en outre présenter au moins l'une quelconque des caractéristiques suivantes :

- la couche tissée comprend des fils d'alumine

$(Al_2O_3)$ ;
- la couche tissée comprend des fils de silice $(SiO_2)$;
- la couche tissée comprend des fils de borate $(B_2O_3)$;
- elle comprend en outre une masse de matériau électriquement isolant, de préférence interposée entre le fil et la gaine ;
- la masse isolante est constituée en un matériau minéral, par exemple en magnésie $(Mg0)$ ;
- elle présente une portion de forme générale allongée ;
- elle comprend un connecteur et présente un tronçon chauffant et un tronçon de raccordement adjacent au connecteur, le fil ayant dans le tronçon de raccordement une section transversale de plus grande surface que la section transversale du fil dans le tronçon chauffant ; et
- elle comprend un connecteur et une portion adjacente au connecteur et de forme tronconique.

On prévoit également selon l'invention un organe, notamment une sonde de mesure d'un paramètre d'un flux d'air tel que la température, montée à bord d'un véhicule, l'organe comprenant un corps et au moins une résistance chauffante selon l'invention, la résistance étant fixée au corps.

Avantageusement, la résistance chauffante a une forme non plane.

Avantageusement, la résistance chauffante s'étend à l'extérieur du corps.

On prévoit enfin selon l'invention un procédé de fabrication d'un organe, notamment d'une sonde de mesure d'un paramètre d'un flux d'air tel que la température montée à bord d'un véhicule, dans lequel on déforme une résistance selon l'invention en vue de la fixer à un corps de l'organe.

D'autres caractéristiques et avantages de l'invention apparaîtront encore à la lecture de la description suivante d'un mode préféré de réalisation et de variantes donnés à titre d'exemples non limitatifs en référence aux dessins annexés sur lesquels :

- la figure 1 est une vue schématique d'ensemble de la résistance chauffante selon un mode préféré de réalisation de l'invention après fabrication mais avant déformation ;
- la figure 2 est une vue partielle à plus grande échelle et en coupe de la résistance de la figure 1 ; et
- la figure 3 est une vue en perspective d'une sonde de température destinée à recevoir la résistance des figures 1 et 2 :

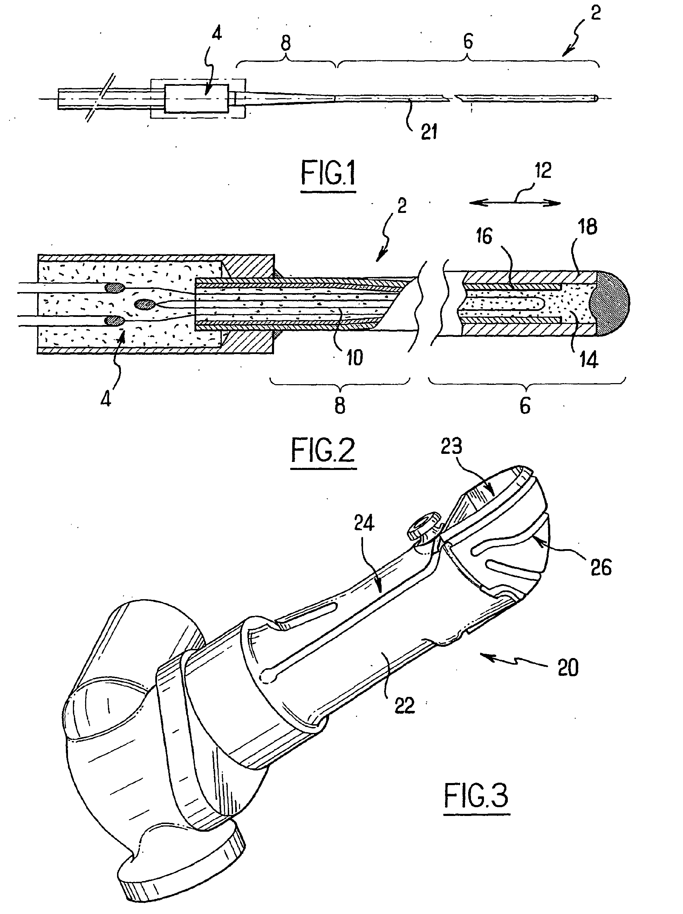

On a illustré aux figures 1 et 2 un mode préféré de réalisation d'une résistance chauffante selon l'invention. La résistance est ici illustrée dans sa configuration après fabrication et avant déformation de la résistance pour sa mise en place sur un organe tel que la sonde de température de la figure 3.

La résistance 2 comprend un connecteur électrique 4, un tronçon chauffant 6 et un tronçon de raccordement 8 reliant le connecteur au tronçon chauffant 6. Le tronçon de raccordement 8 est donc adjacent au connecteur 4 et au tronçon chauffant 6.

Dans le tronçon chauffant 6 et le tronçon de raccordement 8, la résistance comprend un fil électriquement conducteur 10. Le fil 10 peut être réalisé en nickel de haute pureté ou encore en alliage $Cu_{55}Ni_{45}$. Le fil est replié sur lui-même pour former plusieurs segments ayant chacun une forme essentiellement rectiligne et s'étendant parallèlement les uns aux autres suivants la direction longitudinale 12 de la résistance chauffante illustrée à la figure 1. La résistance chauffante est allongée suivant cette direction.

Le fil 10 est logé dans un matériau électriquement isolant 14. Il s'agit en l'espèce de magnésie (MgO), matériau qui présente d'excellentes propriétés d'isolation électrique et peut être facilement mis en oeuvre. Les différents segments du fil 10 sont séparés les uns des autres par ce matériau. Le matériau 14 en magnésie est formé au moyen de grains compactés.

Dans les tronçons 6 et 8, la résistance comprend en outre une gaine 16 électriquement isolante constituée en céramique. En l'espèce, cette gaine est constituée par une couche d'un tissu formé par l'entrelacement de fils. Dans le présent exemple, ces fils comprennent des fils d'alumine ($Al_2O_3$), des fils de silice ($SiO_2$) et des fils de borate ($B_2O_3$).

Dans ce mode de réalisation, la gaine 16 a la forme d'un manchon essentiellement cylindrique. Ce manchon entoure l'ensemble formé par l'isolant 14 et le fil 10, sauf à l'extrémité terminale du tronçon chauffant 6 où l'isolant 14 n'est pas recouvert.

Enfin, dans les tronçons 6 et 8, l'ensemble est recouvert par un tube externe 18 de forme cylindrique, constitué en l'espèce en nickel. Ce tube recouvre l'ensemble formé par le fil 10, l'isolant 14, et la gaine 16. Par référence à un axe longitudinal 21 de la résistance chauffante, la gaine 16 se trouve ainsi interposée radialement entre l'isolant 14 et le tube 18. L'axe 21 correspond à la fibre moyenne de la résistance chauffante.

Dans le présent exemple, chaque segment du fil 10 s'étend à la fois dans le tronçon de raccordement 8 et dans le tronçon chauffant 6.

Le fil est configuré de sorte que la section transversale de chaque segment présente une plus grande surface au niveau du tronçon de raccordement 8 qu'au niveau du tronçon chauffant 6. La surface relativement réduite de cette section dans le tronçon chauffant 6 permet justement aux fils électriques de produire un chauffage par effet joule. Au contraire, la surface relativement grande de cette section dans le tronçon de raccordement 8 permet d'éviter dans une large mesure cet effet joule dans le tronçon 8 et forme donc un raccordement dit raccordement froid. Du fait de cette différence de surface, le tronçon de raccordement 8 a une forme tronconique d'axe 21, la section la plus étroite du cône étant contiguë au tronçon chauffant 6 tandis que sa section la plus large est contiguë au connecteur 4. De plus, cette section de plus grande surface au niveau du tronçon de raccordement 8 confère à ce tronçon une plus grande résistance aux sollicitations mécaniques ainsi qu'aux sollicitations thermomécaniques aussi bien lors de la déformation de la résistance chauffante comme on le verra plus loin que lors du fonctionnement de celle-ci.

La résistance chauffante 2 est destinée à faire partie d'une sonde de température telle que la sonde 20 illustrée à la figure 3. Celle-ci est généralement du type de celle présentée dans le document FR-2 808 874 auquel nous renvoyons pour de plus amples détails. Cette sonde 20 comprend un corps 22 présentant une ouverture 23 dans laquelle pénètre le flux d'air dont la température doit être mesurée. Cette sonde est montée à bord d'un véhicule tel qu'un aéronef et permet de mesurer la température de l'air pénétrant dans le réacteur de l'aéronef.

Une face externe 24 du corps 22 présente des rainures 26, pour certaines courbes et pour certaines rectilignes, formant des logements allongés à la surface du corps 22. La résistance 2 est destinée à être logée dans ces rainures au contact du corps 22 pour permettre une mise à température de celui-ci. La résistance 2 est déformée et logée dans les rainures 26 en y étant fixée par brasage.

L'excellente tenue mécanique de la résistance 2 l'autorise à subir des déformations mécaniques sévères et permet par conséquent l'emploi de techniques de mise en forme variées telles que le pliage ou l'étirage. De même des techniques d'assemblage telle que le soudage ou le brasage sont tout à fait envisageables. On pourra également utiliser une technique de mise en oeuvre telle que le rétreint. D'autres techniques sont également possibles.

Ainsi, lors de la fabrication de la sonde, on utilise la résistance dans sa configuration initiale rectiligne telle qu'elle est illustrée aux figures 1 et 2, et on déforme celle-ci pour la loger dans les rainures 22. Au cours de cette déformation, la résistance prendra une forme non plane, c'est-à-dire une forme gauche. La résistance selon l'invention autorise des mises en oeuvre contraignantes (étirage, pliage, etc.) et des techniques d'assemblage sévères (soudage, brasage, collage, etc.) tout en lui assurant d'excellentes caractéristiques (diélectrique, puissance électrique) et fonctionnelles (herméticité, assemblage). Une telle résistance peut être utilisée à bord des véhicules aéronautiques et spatiaux en particulier. D'autres domaines d'applications sont également envisageables.

Le connecteur 4 permet d'alimenter en courant électrique la résistance une fois celle-ci montée sur la sonde 20. Grâce à la résistance, la sonde 20 est chauffée en permanence de façon à éviter toute formation de givre compte tenu des températures de vol négatives et de l'humidité de l'air. La résistance 2 parcourt la sonde dans sa zone active. La forte puissance électrique qui parcourt la résistance se transforme en chaleur et maintient la sonde à des températures de dégivrage malgré des températures extérieures très basses, par exemple de l'ordre de moins 50°C, et une forte dissipation thermique due aux échanges entre la sonde et le flux d'air dans lequel elle baigne.

La résistance chauffante qui vient d'être décrite offre d'excellentes caractéristiques électriques, à savoir un diélectrique jusqu'à 10 KV/mm et une puissance électrique jusqu'à 500 W/m. Le coefficient thermo électrique TCR permet de suivre la variation de résistibilité de la résistance chauffante entre 0 et 100 °C. La détermination expérimentale de ce coefficient se fait à partir de la formule suivante :

$$TCR = \frac{R_{0°C} - R_{\acute{e}bull}}{T_{\acute{e}bull} \times R_{0°C}}$$

Dans le cas de la présente invention, le coefficient TCR se situe entre 0 et 0,0068 °C$^{-1}$).

La présence de la gaine 16 permet d'éviter un amorçage diélectrique entre le matériau 14 et le fil 10 qui risquerait sinon de se produire lors des déformations de la résistance pour sa mise en forme et son installation.

Bien entendu, on pourra apporter à l'invention de nombreuses modifications sans sortir du cadre de celle-ci.

On pourra prévoir de mettre en oeuvre la caractéristique selon laquelle la surface de la section transversale du fil 10 est plus grande dans le tronçon de raccordement que dans le tronçon chauffant 6, indépendamment de la constitution de la gaine 16 au moyen d'une couche tissée.

Par ailleurs, on pourra prévoir de mettre en oeuvre la caractéristique selon laquelle la résistance est logée dans au moins un rainure externe du corps 22, indépendamment de la constitution de la gaine 16 au moyen d'une couche tissée.

Dans une variante de réalisation, on pourra prévoir de supprimer le matériau isolant 14 et de le remplacer par une gaine en céramique tissée entourant individuellement chaque segment du fil 10, l'ensemble étant comme précédemment entouré par la gaine 16 en céramique tissée.

On pourra également prévoir que la gaine 16 en céramique comprend en plus de la couche tissée une ou plusieurs autres couches tissées ou non tissées.

Bien que la résistance soit ici disposée à l'extérieur du corps 22 de la sonde 20, on pourra prévoir d'utiliser la résistance à l'intérieur d'un organe à réchauffer.

**Revendications**

1. Résistance chauffante (2), notamment pour la chauffe d'une pièce massive (20), comprenant :

   - un fil électrique (10) ; et
   - une gaine (16) en céramique entourant le fil,

**caractérisée en ce que** la gaine comprend une couche tissée.

2. Résistance chauffante conforme à la revendication précédente, **caractérisée en ce que** la couche tissée (16) comprend des fils d'alumine ($Al_2$ , $0_3$).

3. Résistance chauffante selon l'une quelconque des revendications précédentes, **caractérisée en ce que** la couche tissée (16) comprend des fils de silice ($SiO_2$).

4. Résistance chauffante selon l'une quelconque des revendications précédentes, **caractérisée en ce que** la couche tissée (16) comprend des fils de borate ($B_2O_3$).

5. Résistance chauffante selon l'une quelconque des revendications précédentes, **caractérisée en ce qu'**elle comprend en outre une masse (14) de matériau électriquement isolant, de préférence interposée entre le fil (10) et la gaine (16).

6. Résistance chauffante selon la revendication précédente, **caractérisée en ce que** la masse isolante (14) est constituée en un matériau minéral, par exemple en magnésie (Mg0).

7. Résistance chauffante selon l'une quelconque des revendications précédentes, **caractérisée en ce qu'**elle présente une portion (6) de forme générale allongée.

8. Résistance chauffante selon l'une quelconque des revendications précédentes, **caractérisée en ce qu'**elle comprend un connecteur (4) et présente un tronçon chauffant (6) et un tronçon de raccordement (8) adjacent au connecteur, le fil (10) ayant dans le tronçon de raccordement une section transversale de plus grande surface que la section transversale du fil dans le tronçon chauffant.

9. Résistance chauffante selon l'une quelconque des revendications précédentes, **caractérisée en ce qu'**elle comprend un connecteur (4) et une portion (8) adjacente au connecteur et de forme tronconique.

10. Organe (20), notamment sonde de mesure d'un paramètre d'un flux d'air tel que la température, montée à bord d'un véhicule, l'organe comprenant un corps (22), **caractérisé en ce qu'**il comprend au moins une résistance chauffante (2) selon l'une quelconque des revendications précédentes, la résistance étant fixée au corps.

11. Organe selon la revendication précédente **caractérisé en ce que** la résistance chauffante (2) a une forme non plane.

**12.** Organe selon l'une quelconque des revendications 10 à 11 **caractérisé en ce que** la résistance chauffante (2) s'étend à l'extérieur du corps (22).

**13.** Procédé de fabrication d'un organe (20), notamment d'une sonde de mesure d'un paramètre d'un flux d'air tel que la température montée à bord d'un véhicule, **caractérisé en ce qu'**on déforme une résistance (2) selon l'une quelconque des revendications 1 à 9 en vue de la fixer à un corps (22) de l'organe.

**Claims**

**1.** A heating resistance (2) in particular for heating a solid part (20), the resistance comprising:

- an electric wire (10); and
- a ceramic sheath (16) surrounding the wire;

the resistance being **characterized in that** the sheath comprises a woven layer.

**2.** A heating resistance according to the preceding claim, **characterized in that** the woven layer (16) comprises threads of alumina ($AL_2O_3$) .

**3.** A heating resistance according to any preceding claim, **characterized in that** the woven layer (16) comprises threads of silica ($SiO_2$) .

**4.** A heating resistance according to any preceding claim, **characterized in that** the woven layer (16) comprises threads of borate ($B_2O_3$).

**5.** A heating resistance according to any preceding claim, **characterized in that** it further comprises a mass (14) of electrically insulating material, preferably interposed between the wire (10) and the sheath (16).

**6.** A heating resistance according to the preceding claim, **characterized in that** the insulating mass (14) is constituted by a mineral, e.g. magnesia (MgO).

**7.** A heating resistance according to any preceding claim, **characterized in that** it presents a portion (6) of generally elongate shape.

**8.** A heating resistance according to any preceding claim, **characterized in that** it includes a connector (4) and presents a heating segment (6) and a connection segment. (8) adjacent to the connector, the wire (10) having a cross-section in the connection segment of area that is greater than the area of the cross-section of the wire in the heating segment.

**9.** A heating resistance according to any preceding claim, **characterized in that** it includes a connector (4) and a portion (8) adjacent to the connector that is tapering in shape.

**10.** A member (20), in particular a probe mounted on board a vehicle for measuring an air flow parameter, such as temperature, the member comprising a body (22) and being **characterized in that** it includes at least one heating resistance (2) according to any preceding claim, the heating resistance being secured to the body.

**11.** A member according to the preceding claim, **characterized in that** the heating resistance (2) is of a shape that is not plane.

**12.** A member according to claim 10 or claim 11, **characterized in that** the heater resistance (2) extends at the outside of the body (22).

**13.** A method of fabricating a member (20), in particular a probe for mounting on board a vehicle for measuring an air flow parameter such as temperature, the method being **characterized in that** a resistance (2) according to any one of claims 1 to 9 is deformed in order to enable it to be secured to a body (22) of the member.

**Patentansprüche**

**1.** Heizwiderstand (2), insbesondere zur Beheizung eines massiven werkstücks (20), umfassend:

- einen elektrischen Draht (10); und
- eine keramische Umhüllung (16), die den Draht umgibt,

**dadurch gekennzeichnet, dass** die Umhüllung eine gewebte Schicht umfasst.

**2.** Heizwiderstand nach dem vorangehenen Anspruch, **dadurch gekennzeichnet, dass** die gewebte Schicht (16) Fäden aus Aluminiumoxid ($Al_2O_3$) umfasst.

**3.** Heizwiderstand nach irgendeinem der vorangehenen Ansprüche, **dadurch gekennzeichnet, dass** die gewebte Schicht (16) Fäden aus Siliziumdioxid ($SiO_2$) umfasst.

**4.** Heizwiderstand nach irgendeinem der vorangehenen Ansprüche, **dadurch gekennzeichnet, dass** die gewebte Schicht (16) Fäden aus Borat ($B_2O_3$) umfasst.

**5.** Heizwiderstand nach irgendeinem der vorangehenen Ansprüche, **dadurch gekennzeichnet, dass** er außerdem eine Masse (14) aus elektrisch isolierendem Material umfasst, die bevorzugt zwischen dem Draht (10) und der Umhüllung (16) angeordnet ist.

**6.** Heizwiderstand nach dem vorangehenen Anspruch, **dadurch gekennzeichnet, dass** die isolierende Masse (14) aus einem Mineralmaterial gebildet ist, zum Beispiel aus Magensiumoxid (MgO).

**7.** Heizwiderstand nach irgendeinem der vorangehenen Ansprüche, **dadurch gekennzeichnet, dass** er ein Teilstück (6) mit insgesamt länglicher Form aufweist.

**8.** Heizwiderstand nach irgendeinem der vorangehenen Ansprüche, **dadurch gekennzeichnet, dass** er ein Verbindungsstück (4) umfasst, sowie einen Heizabschnitt (6) und einen Verbindungsabschnitt (8) neben dem Verbindungsstück aufweist, wobei der Draht (10) im Verbindungsabschnitt einen Querschnitt mit größerer Oberfläche als der Querschnitt des Drahtes im Heizabschnitt hat.

**9.** Heizwiderstand nach irgendeinem der vorangehenen Ansprüche, **dadurch gekennzeichnet, dass** er ein Verbindungsstück (4) und ein Teilstück (8) umfasst, das dem Verbindungsstück benachbart und kegelstumpfförmig ist.

**10.** Organ (20), insbesondere Sonde zur Messung eines Parameters eines Luftstromes, wie etwa der Temperatur, die an Bord eines Fahrzeuges montiert ist, wobei das Organ einen Körper (22) umfasst, **dadurch gekennzeichnet, dass** es mindestens einen Heizwiderstand (2) nach irgendeinem der vorangehenen Ansprüche umfasst, wobei der Widerstand am Körper befestigt ist.

**11.** Organ nach dem vorangehenden Anspruch, **dadurch gekennzeichnet, dass** der Heizwiderstand (2) eine nicht ebene Form hat.

**12.** Organ nach irgendeinem der Ansprüche 10 bis 11, **dadurch gekennzeichnet, dass** sich der Heizwiderstand (2) außerhalb des Körpers (22) erstreckt.

**13.** Verfahren zur Herstellung eines Organs (20), insbesondere einer Sonde zur Messung eines Parameters eines Luftstroms, wie der Temperatur, die an Bord eines Fahrzeugs montiert ist, **dadurch gekennzeichnet, dass** man einen Widerstand (2) nach irgendeinem der Ansprüche 1 bis 9, im Hinblick darauf, ihn an einem Körper (22) des Organs zu befestigen, formt.

FIG.1

FIG.2

FIG.3

**EP 1 639 860 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2808874

- JP 2001267046 A